# EUROPEAN PATENT APPLICATION

(11) **EP 4 563 339 A1**
(43) Date of publication of application: **04.06.2025**
(21) Application number: 23213391.8
(22) Date of filing: 30.11.2023
(51) Int. Cl.: B32B 7/035, B32B 27/32, B29C 55/06, C08L 23/10

(54) **CROSS-PLY LAMINATE, METHOD FOR PREPARING THE CROSS-PLY LAMINATE, CROSS-PLY PANEL, METHOD FOR PREPARING THE CROSS-PLY PANEL, COMPOSITION FOR PREPARING A MACHINE DIRECTION-ORIENTED FILM, AND A PRODUCT COMPRISING THE CROSS-PLY LAMINATE**

(71) Applicant: Norner AS, 3920 Porsgrunn (NO)
(72) Inventor: BARRETO SOLER, Carlos Alberto, 3920 Porsgrunn (NO); ANWAR IBRAHIM, Hany Fakhry, 3920 Porsgrunn (NO)
(74) Representative: Erbacher, Martin

(57) **Abstract**

The present invention relates to a cross-ply laminate comprising machine direction oriented films (MDO films). The invention further relates to a method for preparing the cross-ply laminate. The invention further relates to a cross-ply laminate obtainable by the method. The invention further relates to a cross-ply panel comprising two or more of the cross-ply laminates. The invention further relates to a method for preparing the cross-ply panel. The invention further relates to a cross-ply panel obtainable by the method. The invention further relates to a composition for preparing a machine direction-oriented film, a tape or a fiber. Finally, the invention relates to a product comprising the cross-ply laminate.

## Description

### FIELD OF THE INVENTION

The present invention relates to a cross-ply laminate comprising at least two machine direction-oriented films. The invention further relates to a method for preparing the cross-ply laminate. The invention further relates to a cross-ply laminate obtainable by the method. The invention further relates to a cross-ply panel comprising two or more of the cross-ply laminates. The invention further relates to a method for preparing the cross-ply panel. The invention further relates to a cross-ply panel obtainable by the method. The invention further relates to a composition for preparing a machine direction-oriented film, a tape or a fiber. Finally, the invention relates to a product comprising the cross-ply laminate.

### BACKGROUND OF THE INVENTION

Fiber reinforcement (glass, carbon, wood...) or particle reinforcement (talc, calcium carbonate, wollastonite...) of Polypropylene improves the mechanical properties of the polymer in expenses of density (light weight and recyclability) and results in a material with at least three components (with implications on recyclability), also conventional fibers such as glass and carbon carry a high carbon footprint from fabrication.

Polypropylene in commercial self-reinforced polypropylene (SRPP) has previously been developed towards self-reinforced laminates by stretching conventional extruded fibers and flat filaments, then integrating the stretched fibers and filaments by weaving into fabrics, then stacking and pressing to produce laminates for thermoforming. This is a complex expensive slow and machinery intensive fiber handling process.

US 7 318 961 B2 discloses a monoaxially drawn polyolefin multilayer film, tape or yarn of the AB or ABA type, having a stretch ratio of more than 12, having an E-modulus of at least 10 GPa, substantially consisting of a central layer (B) of a polyolefin selected from polyethylene and polypropylene, and one or two other layers (A) of a polyolefin from the same class as the material of the central layer B, the DSC melting point of the material of the said other layers (A) being lower than the DSC melting point of the material of the said central layer (B), wherein the central layer (B) is between 50 and 99 wt. % of the material and the other layers (A) between 1 and 50 wt. %.

US 10 850 479 B2 discloses a process for the production of a polymeric article directed to (a) forming a ply having successive layers, namely, (i) a first layer made up of strands of an oriented polymer material; (ii) a second layer of a polymeric material; (iii) a third layer made up of strands of an oriented polymeric material, wherein the second layer has a lower peak melting temperature that of the first and third layers; (b) subjecting the ply to conditions of time, temperature, and pressure sufficient to melt a proportion of the firsts layer to melt the second layer entirely, and to melt a proportion of the third layer, and to compact the ply; and (c) cooling the compacted ply.

It is, therefore, the object of the present invention to provide a cross-ply laminate for forming a cross-ply panel and a composition for preparing a machine direction oriented film, a tape or a fiber overcoming drawbacks of the prior art, especially for improving the mechanical properties, such as tensile strength or breakage frequency, of a cross-ply panel obtained from the cross-ply laminate or of products obtained from the composition.

### DISCLOSURE

The object is achieved by a cross-ply laminate comprising one or more machine direction-oriented films (MDO films) in machine direction, and one or more MDO films in transverse direction
wherein
- the MDO films in machine direction each have a machine direction orientation at 0°, wherein adjacent MDO films in machine direction have same machine direction orientations;
- the MDO films in transverse direction each have an orientation between 1° and 90°, wherein adjacent MDO films in transverse direction have same transverse direction orientations;
- wherein each of the MDO films in machine direction and the MDO films in transverse direction independently comprises
   - a virgin polyolefin;
   - a recycled polymer resin;
   - a mixture of the virgin polyolefin and the recycled polymer resin; or
   - a multilayer film comprising at least two sub-layers independently selected from the group consisting of a sub-layer consisting of virgin polyolefin and a sub-layer consisting of a recycled polymer resin.

The object is further achieved by a method for preparing the cross-ply laminate according to the present invention, the method comprising the steps:
- providing a first film comprising a virgin polyolefin; a post-consumer polymer resin; or a mixture of the virgin polyolefin and the post-consumer polymer resin;
- processing the first film, preferably by heating and stretching the film, to obtain a machine direction oriented film;
- providing a second film comprising a virgin polyolefin; a post-consumer polymer resin; or a mixture of the virgin polyolefin and the post-consumer polymer resin;
- processing the second film, preferably by heating and stretching the film, to obtain a transverse direction oriented film;
- laminating MDO film oriented in machine direction and the MDO film oriented in transverse orientation wherein an angle between the two films is from more than 0° to 90°, preferably about 90°.

Optionally a third film can be placed between the two previously mentioned films in an orientation between 0° to 90° and become part of the cross-ply laminate.

The object is further achieved by a cross-ply laminate obtainable by the method according to the present invention.

The object is further achieved by a cross-ply panel comprising two or more cross-ply laminates according to the present invention.

The object is further achieved by a method for preparing the cross-ply panel according to the present invention, the method comprising the steps:
- stacking at least two cross-ply laminates according to the present invention; and
- pressing and/or laminating the stacked cross-ply laminates.

The object is further achieved by a composition for preparing a MDO film, a tape or a fiber, the composition comprising a post-consumer polymer resin, a beta-nucleating agent, an elastomer and optionally a virgin polymer resin or a process regrind or a post-consumer recycled polymer.

Finally, the object is achieved by a product comprising the cross-ply laminate according to the invention or cross-ply panel according to the present invention or the composition according to the present invention or a machine direction oriented film obtainable by the polypropylene composition according to the present invention, wherein the product is selected from the group consisting of a component or product in automotive; aerospace; marine; logistics, such as a cargo container; consumer good, such as sports good, luggage; electric and electronic component or product; component or product in solar or wind energy application; material for building and infrastructure; component or product in orthotics; ballistic component or product; component or product in impact, stab and personal protection; industrial packaging, such as crates, e.g. may be a suitcase, an automobile part, a component of a photovoltaic module, a geomembrane, a big bag, a concrete reinforcement and a braided rope.

Surprisingly, it was found that a certain PCR content in the composition and the cross-plies according to the invention is an advance to the prior art as significant content of recyclates has not been achieved in conventional SRPP due to the limitation of the conventional process to incorporate inhomogeneous material such as a recyclate as the inhomogeneities hamper severely the stretching process and thus the ultimate properties of the material.

Hereinafter, various embodiments of the present disclosure will be described in detail so that those ordinarily skilled in the art to which the present disclosure pertains can easily carry out the present disclosure. However, these are only examples given for illustrative purposes, and the scope of the present disclosure is not intended to be limited to the following contents.

Unless otherwise restricted, a detailed description defining or specifying the elements may be applied to all inventions, and is not limited to descriptions of particular inventions. That is, the present disclosure also refers to combinations of the embodiments even if they are disclosed separately.

Additionally, unless explicitly stated otherwise, a singular form includes a plural form throughout the detailed description and the appended claims.

The term "comprise" or "include" when used in this specification, specifies the presence of stated elements, but does not preclude the presence or addition of one or more other elements, unless the context clearly indicates otherwise. However, unless explicitly stated otherwise, "comprising" or "including" or the like includes "essentially comprising" and "consisting of".

The term "essentially comprises" as used herein has the meaning of "comprising at least 70 %", preferably of "comprising at least 80 %", most preferred of "comprising at least 90 %". If reference is made to the amount of a constituent in a mixture of material, % is wt %, relative to the total weight of the respective mixture. For example, a machine direction oriented film essentially comprising a recycled polymer resin may comprise the recycled polymer resin in an amount of at least 10 wt% with respect to the total weight of the machine direction oriented film.

Additionally, the terms "about" and "substantially" as used herein are used in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

Throughout the specification, "A and/or B" refers to either A or B or both.

### Cross-ply laminate

According to one aspect, the present invention relates to a cross-ply laminate comprising one or more parallel machine-direction-oriented films (MDO films) installed in machine direction, and one or more parallel MDO films installed in transverse direction in an orientation between 0° (machine direction) and larger than 0° to 90° (transverse direction).

A machine-direction oriented film (MDO film) is a polymer film prepared by heating the unoriented film to a temperature slightly below its melting point and stretching it in machine direction in an MDO line.

A cross-ply laminate containing a number of at least two of plies, each with a film orientation of from 0° to 90°. In terms of the present invention, the plies are built from machine direction-oriented films (MDO films) resulting from the stretching of the extruded films. The films are fed to the cross-ply lamination process: One layer of one or more MDO films is fed in machine direction (MD), and in a separate layer on top of the previous layer, one or more MDO films in a transverse direction (TD) are installed in angles between larger than 0° and up to 90°.

Each of the MDO films independently comprises
- a virgin polyolefin;
- a recycled polymer resin;
- a mixture of the virgin polyolefin and the recycled polymer resin; or
- a multilayer film comprising at least two sub-layers independently selected from the group consisting of a sub-layer consisting of virgin polyolefin and a sub-layer consisting of a recycled polymer resin.

It may be provided that at least one of the MDO films in the cross-ply laminate consists of
- a recycled polymer resin;
- a mixture of the virgin polyolefin and the recycled polymer resin; or
- a multilayer film comprising at least two sub-layers independently selected from the group consisting of a sub-layer consisting of virgin polyolefin and a sub-layer consisting of a recycled polymer resin.

The term "virgin" as used herein refers to a material not discarded by end users but rather generated during a manufacturing process. Virgin polyolefin is a polyolefin manufactured from natural resources such as petrochemical feedstock, crude oil, natural gas, biobased feedstock, etc. It is the purest form of polyolefin. It can also be said that this is the unprocessed form of polyolefin. It possesses all original properties.

The virgin polyolefin may be selected from the group consisting of polyethylenes, a polypropylene homopolymer, a copolymer polyolefin, a terpolymer polyolefin or a mixture of two or more thereof. It is explicitly provided that the virgin polyolefin may be a blend, or the multilayer construction, of two or more selected from the group consisting of a polypropylene homopolymer, a copolymer polyolefin, and a terpolymer polyolefin. The copolymer polyolefin may be a copolymer of ethylene and propylene. The terpolymer polyolefin may be a polymer of three or more selected from the group consisting of ethylene, propylene, butene, hexene, octene, vinyl acetate, and glycidyl methacrylate, preferably of ethylene, propylene, and one selected from the group consisting of butene, hexene, octene, vinyl acetate, and glycidyl methacrylate.

The virgin polyolefin may have a melting temperature from 110 to 180°C determined according to ISO 11357-3:2018.

"Recycling" means any recovery operation by which waste materials are reprocessed into products, materials or substances whether for the original or other purposes. This is also known as "Mechanical Recycling". It includes the reprocessing of organic material but does not include energy recovery and the reprocessing into materials that are to be used as fuels or for backfilling operations.

The recycled polymer resin is selected from the group consisting of a scrap polymer resin, a pre-consumer polymer resin, and a post-consumer polymer resin. Unless defined else herein, scrap polymer resin, pre-consumer polymer resin, and post-consumer polymer resin are respective materials in accordance with the "Guidance on Waste Definitions" of the Circular Plastic Alliance of September 21, 2021.

A scrap material is a material generated in a process and capable of being reclaimed within the same process that generated it.

A pre-consumer material diverted from the waste stream during a manufacturing process. Excluded is reutilization of materials such as rework, regrind or scrap generated in a process and capable of being reclaimed within the same process that generated it.

A post-consumer material is a material generated by households or by commercial, or industrial and institutional facilities in their role as end-users of the product which can no longer be used for its intended purpose. This includes returns of material from the distribution chain.

The post-consumer polymer resin may be a post-consumer polyethylene resin, a post-consumer polypropylene homopolymer resin, a post-consumer copolymer polyolefin resin, a post-consumer terpolymer polylolefin resin or a mixture of two or more thereof. The post-consumer polypropylene homopolymer resin may comprise minor amounts of other impurities (less than 15 wt.-%, preferably 2 wt.-% based on the total weight of the polypropylene homopolymer resin) of other types of polypropylene, other polyolefins or other thermoplastics such as polystyrene, polyethylene-terephthalate (PET), acrylonitrile-butadiene-styrene (ABS), high-impact polystyrene (HIPS), or polyamide. Other non-polymeric impurities such as soil, wood or residues coming from etiquettes and labels, same as other impurities from crossed contamination during use and/or the collection recycling process can also be present in the recyclates.

The recycled polymer resin may be obtained, for example from recycling, preferably be recovered from closed loop or open loop recycling of polymer from the following products, from a source selected from the group consisting of woven transportation bags, packaging bags from oriented polypropylene filaments, geomembranes, machine direction oriented films, biaxially oriented films, unoriented films polypropylene fibers, polypropylene ropes, rafia products, non-alpha-nucleated sources and a mixture of two or more thereof.

The virgin resin and/or the recycled resin may not be alpha-nucleated.

Polypropylene (PP) naturally crystallizes in alpha (a), beta (β) and gamma (γ) forms. Alpha is predominant and beta and gamma occur in small quantities.

The additives to change the crystallization kinetics and favor one or another crystal forms are called nucleating agents and can be divided as inorganic additives, organic additives, and polymers.

Those additives accelerating crystallization and, in some instances, changing the size of the alpha spherulites are called alpha nucleators. Typical alpha nucleators are, among the most known, fillers such as talc or calcium carbonate or organic esters such as benzoates or phosphates and commercial additives under trade name.

Under specific processing conditions and/or the use of beta nucleators, beta crystals can be nucleated in expenses of the predominant alpha crystals. The β-crystals of polypropylene have a metastable crystal form. The formation of β-crystals can improve the toughness, heat resistance of a material, porosity and also the processability, in particular the drawability of PP. Typical beta nucleator are , among the most known, Quinacridone dye, Aluminum salt of 6-quinazirin sulfonic acid, Disodium salt o-phthalic acid, Isophthalic and terephthalic acids, N-N'-dicyclohexyl 2-6-naphthalene dicarboximide, blends of organic dibasic acid + oxide, hydroxide, or acid of Group II metal (Mg, Ca, St, Ba.), in addition, there are masterbatches under trade name formulated and sold for the purpose.

In this invention the preferred polyolefin materials should not be alpha nucleated to avoid hampering the drawability, and furthermore, the effect of beta nucleators which are added to improve the drawability and the properties of the products.

The recycled polymer resin may have a melt flow rate of 0.5 to 15 g/10 min, as determined in accordance with ASTM D1238 at 230° C. and 2.16 kg. By blending resins with different MFR and/or applying chain extension, one can end up in the desired rheology.

At least one of the machine-direction oriented films (MDO films in machine direction and the MDO films in transverse direction) may further comprise a beta-nucleating agent. The beta-nucleating agent may be selected from the group consisting of a metal phthalate, a metal salt, a metal hydrophthalate, dicarboxylic acid derivative type diamide compounds from C₅-C₈-cycloalkyl monoamines or C₆-C₁₂-aromatic monoamines and C₅-C₈-aliphatic dicarboxylic acid, C₅-C₈-cycloaliphatic dicarboxylic acid or C₆-C₁₂-aromatic dicarboxylic acid or mixtures thereof.

At least one of the machine-direction oriented films (MDO films in machine direction and the MDO films in transverse direction) may further comprise an elastomer. The elastomer may be selected from the group consisting of an olefin block copolymer, an unsaturated elastomer, a reactive compatibilizer or mixture of two or more thereof, preferably an olefin block copolymer. The elastomer may be a crosslinkable elastomer, especially may be unsaturated and/or may have a small content of peroxide, preferably may not comprise peroxide.

The term "olefin block copolymer" or "OBC" may mean an ethylene/a-olefin multi- block copolymer and includes ethylene and one or more copolymerizable a-olefin comonomer in polymerized form, characterized by multiple blocks or segments of two or more polymerized monomer units differing in chemical or physical properties.

When referring to amounts of "ethylene" or "comonomer" in the copolymer, it is understood that this means polymerized units thereof. In some embodiments, the multi-block copolymer can be represented by the following formula:

(AB)ₙ

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star- shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

Preferably, ethylene comprises the majority mole fraction of the whole block copolymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an a-olefin having 3 or more carbon atoms. In some embodiments, the olefin block copolymer may comprise 50 mol to 90 mol ethylene, preferably 60 mol to 85 mol , more preferably 65 mol to 80 mol . For many ethylene/octene block copolymers, the preferred composition comprises an ethylene content greater than 80 mole percent of the whole polymer and an octene content of from 10 to 15, preferably from 15 to 20 mole percent of the whole polymer.

The olefin block copolymer includes various amounts of "hard" and "soft" segments. "Hard" segments are blocks of polymerized units in which ethylene is present in an amount greater than 95 weight percent, or greater than 98 weight percent based on the weight of the polymer, up to 100 weight percent. In other words, the comonomer content (content of monomers other than ethylene) in the hard segments is less than 5 weight percent, or less than 2 weight percent based on the weight of the polymer, and can be as low as zero. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent and can be up to 100 weight percent. The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/a-Olefin Block Inter-polymers," filed on March 15, 2006, in the name of Colin L. P. Shan, Lonnie Hazlitt, et. al. and assigned to Dow Global Technologies Inc., the disclosure of which is incorporated by reference herein in its entirety. In particular, hard and soft segment weight percentages and comonomer content may be determined as described in Column 57 to Column 63 of US 7,608,668.

At least one of MDO films machine direction and the MDO films in transverse direction is surface modified, especially may be surface modified to improve the performance and/or the aesthetics.

At least one of the MDO films machine direction and the MDO films may have a multilayer structure.

The multilayer structure may comprise
- a core layer (which may be referred to as reinforcing layer) comprising a virgin polyolefin; a recycled polymer resin; or a mixture of the virgin polyolefin and the recycled polymer resin; and
- an adhesive layer provided on at least one surface, preferably on both surfaces, of the core layer.The core layer may be made of a rigid virgin polyolefin; a rigid recycled polymer resin; or a mixture of the rigid virgin polyolefin and the rigid recycled polymer resin, such as high-density polyethylene or homopolypropylene, especially virgin polypropylene from homopolypropylene or a mixture (preferably obtained by compounding) of recycled polypropylene resin and virgin polypropylene from homopolypropylene.

The adhesive layer may comprise, essentially comprise, or consist of random polypropylene and/or terpolymer. Alternatively, the adhesive layer may comprise, essentially comprise, or consist of one or more selected from a pressure sensitive polyolefin, styrene-ethylenebutylene-styrene (SEBS), polyurethane. The adhesive layer may further comprise IR absorbers or particulate heating promoters, such as iron powder, magnetite, carbon black, graphite, nanotubes, preferably in amounts from 5 to 10wt.-% with respect to the total weight of the adhesive layer. The adhesive layer may further comprise promoters of ultrasonic heating such as oxygen containing polymers built from comonomers bearing polar groups (such as acrylic acid, methacrylic acid, maleic anhydride) and polymers with grafted oxygen containing groups (such as maleic anhydride, methacrylic acid, epoxy resins )

The core layer may comprise at least two sub-layers, wherein at least one sublayer comprises the recycled polymer resin, preferably comprises the recycled polymer resin in an amount of 1 wt% or more, 2 wt% or more, 5 wt% or more, 10 wt% or more, 20 wt% or more, 30 wt% more, 40 wt% or more, 50 wt% or more with respect to the total weight of this sublayer, and at least one sublayer does not comprise recycled polymer resin.

Especially, the core layer may be made of three layers wherein an inner sub-layer is sandwiched by two outer sub-layers. The inner sub-layer may comprise, essentially comprise or consist of the recycled polymer resin.

The outermost layer in some instances can be surface modified in order to improve the aesthetics or functionality or simply to enhance the adhesion to films of functional or aesthetic characteristics. Functional characteristics refer to the implementation and/or modification of non-intrinsic properties of the substrate such as contact angle, surface resistivity, flame retardancy, haptics, etc. Aesthetic properties refers to the general appearance, to properties such as colour, gloss, and the like

### Film Production

Films may be produced following the steps of:
- Production of unoriented films by cast extrusion or film blowing
- Production of machine direction oriented films (MDO Films)

The two processes can be performed online or offline. The online process is preferred
Production of unoriented films by cast extrusion or film blowing

The unoriented films may have a thickness of 10 mm to 100 µm, preferably between 200 µm and 600 µm, such as 300 µm . The films can be produced by multilayer cast extrusion or multilayer film blowing. The width of the films after trimming for cast film and as lay flat for blown film can be from 400 cm to 1 cm. More preferably from 150 cm to 4 cm, even most preferably between 100 cm and 10 cm, such as about 40cm

### Production of machine-direction oriented films (MDO films)

The MDO films become self-reinforced from the orientation of the crystalline extrusion in the machine direction. The self-reinforcement can be quantified, e.g. from the increase in modulus, strength and impact performance.

The MDO processing results in a thinner and more narrow film than the starting material. The machine direction oriented films may have a thickness of 10 mm to 100 µm, preferably 40 mm to 60 µm, such as about 50 µm, respectively. The machine direction oriented films may have a width of 10 cm to 20 cm, such as about 16 cm, respectively.

The MDO processing may comprise one or more stretching stages performed with diverse but systematic combinations of draw ratios, temperatures and line speeds. The MDO processing can be performed off-line in an MDO machine of single stage or preferably online in a multistage MDO machine.

Each stage may comprise substages of heating, stretching and optional annealing, implemented with rollers heated at different temperature with a maximum reference temperature and with increasing and/or decreasing speed to reach the target draw ratio and relaxation at the exit of the MDO machine.

The line speed, measured at the input of the MDO machine is typically between 1 m/min and 50 m/min, most preferred between 3m/min and 10m/min
The most preferred MDO process comprises a two stage process, in which the first stage comprises a draw ratio between 3X to 12X (preferably 6X), implemented using a max temperature in the rollers between 6o°C and 130°C , most preferably between 90 and 120°C. The second stage comprises a draw ratio between 5X and 1.1X, most preferably between 1,5X and 2.5X, even most preferably between 1,7X and 2,4X, to complete between the two stages a total draw ratio between 9X and 15X, most preferably between 11X and 13X

Optionally surface treatments can be implemented to improve the functionality of the films or to facilitate the lamination performed in the following stages. Each or some of the film layers then can also be surface treated to improve the bond between the different material of the hybrid composite, using Corona, Plasma, flame and chemical surface treatment techniques

### Method for preparing the cross-ply laminate

The invention is further related to a method for preparing a cross-ply laminate. The cross-ply laminate may be the cross-ply laminate according to the present invention as characterized above.

The method for preparing a cross-ply laminate comprising the steps:
- providing a first film comprising a virgin polyolefin; a recycled polymer resin; a mixture of the virgin polyolefin and the recycled polymer resin; or a multilayer film comprising at least two sub-layers independently selected from the group consisting of a sub-layer consisting of virgin polyolefin and a sub-layer consisting of a recycled polymer resin;
- processing the first film, preferably by heating and stretching the film, to obtain a machine direction oriented film (MDO film);
- providing a second film comprising a virgin polyolefin; a recycled polymer resin; a mixture of the virgin polyolefin and the post-consumer polymer resin; or a multilayer film comprising at least two sub-layers independently selected from the group consisting of a sub-layer consisting of virgin polyolefin and a sub-layer consisting of a recycled polymer resin;
- processing the second film, preferably by heating and stretching the film, to obtain another machine direction oriented film;
- laminating the two MDO films orienting the first MDO film at 0° and the second MDO film in the transverse direction in an angle between 0° to 90°, preferably about 90°.

The method comprises a first step of providing a first film, which may be referred to as a MDO film building block, comprising a virgin polyolefin; a recycled polymer resin; a mixture of the virgin polyolefin and the recycled polymer resin; or a multilayer film comprising at least three main sub-layers (ABA). In this structure "ABA", A is an adhesive layer, preferably comprising a PP copolymer or terpolymer comprising a virgin component and optionally mixed with a recyclate. B is the core layer, which may be referred to as reinforcing layer, which preferably essentially comprises homo polypropylene which can be of virgin origin and recycled origin in well-defined proportions. B can be described as a mechanical blend of virgin and recyclate or a symmetric multilayer comprising a number of layers of virgin and recyclate, e.g. B can be split into three sublayers B'-C-B' where B' is a virgin component and C is a recyclate component. That is, in one embodiment, the first film (MDO film) can be described also as a five layers AB'CB'A MDO film. Additional Virgin or recycled component may be added to complete 6 or more layers

The second film is provided in the same way as described above for the first film.

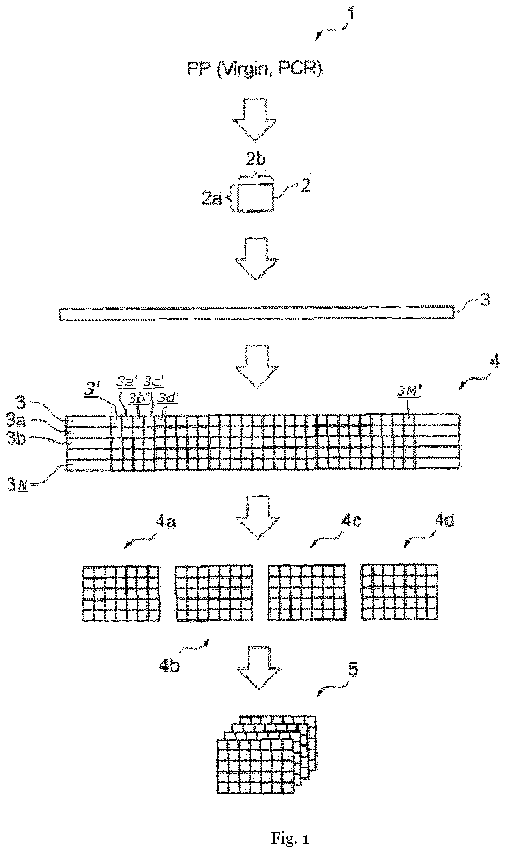

A two-layer cross-ply laminate can then be fabricated by a process as shown in Fig. 1 by
1) taking one array of aligned first films 3 to 3N with a N number of aligned or parallel films and a total width Y (as described in the previous paragraph ) oriented in machine direction (= 0°); and
2) arranging, with an orientation between more than 0 and 90°, another array of aligned MDO film building blocks which are the second films 3' to 3M' with a M number of aligned or parallel second films and a total width Z and sufficient length to match the width Y of the array oriented in machine direction or 0°.

The width Y of the resulting cross-ply laminate may be between 300 cm and 1 cm, preferably from 150 cm and 5 cm , most preferably from 100cm and 10 cm.

The cross-ply process can be done in absence of any joining technique but can also be aided by one or more lamination techniques. Laminating can be carried out with the known technologies including, thermal lamination, ultrasonic lamination, Radio Frequency welding, vibration welding, electrostatic welding, laser welding, adhesive lamination, microwave lamination, induction heated lamination, infrared heated lamination.

The method may further comprise providing further MDO films (a third film, a fourth film etc.), processing the respective further films as described above for the first and the second film, to install one or more further machine direction oriented films, and/or one or more further transverse direction oriented films etc. which can then be laminated with the machine direction oriented film and the transverse direction oriented film.

### Cross-ply laminate obtainable by the method of the present invention

The invention is also directed to a cross-ply laminate obtainable by this method.

### Cross-ply panel

The invention further relates to a cross-ply panel comprising two or more cross-ply laminates according to the present invention as characterized above. The cross-ply panel may comprise two or more cross-ply laminates stacked, that is, adjacent and in direct contact, with each other. The cross-ply panel may comprise the 2 to 100 cross-ply laminates stacked, that is, adjacent and in direct contact, with each other, such as from 20 to 60 cross-ply laminates. Lamination can be carried out with the known technologies including, thermal lamination, ultrasonic lamination, radio frequency welding, vibration welding, electrostatic welding, laser welding, adhesive lamination, microwave lamination, induction heated lamination, infrared heated lamination.

The thickness of the cross-ply panel may be the sum of the thickness of the cross-ply laminates forming the cross-ply panel. E.g. the thickness of the cross-ply panel may be from 0.5 to 5 mm, such as from 1 to 3 mm.

### Method for preparing the cross-ply panel

The present invention is further related to a method for preparing the cross-ply panel according to the invention. The method comprises the steps of
- stacking at least two cross-ply laminates according to the present invention as described above;
- optionally adding plies of different nature to the at least two cross-ply laminates according to the present invention, wherein the plies of different nature comprise at least one selected from the group consisting of mineral fibers, carbon fibers, polymer fibers, plant fibers and polymer based films with a functional or aesthetical purpose;
- pressing and/or laminating the stacked cross-ply laminates; And
- optionally surface modifying the cross-ply panel. By modifying the surface of the cross-ply panel, performance and/or aesthetics thereof can be improved.
- The nature of the plies added to the stack can be different than the majority of the plies based on oriented polyolefin MDO films. E.g, Plies located to the surface can have different nature or functionality than that those of the MDO films building blocks. The plies added to the surface may have an aesthetic or functional purpose. E.g., Plies added to the surface or the core may have a reinforcing effect or an aesthetic function. These plies can comprise woven or unwoven fabrics of fibers such as polyolefin fibers or tapes, glass fibers, basalt fibers, aramid fibers, carbon fibers. These fibers can be embedded in thermoplastics or thermoset resins. Preferably these plies must be polyolefin based or with fibers and fabrics embedded in thermoplastics. Most preferably these plies must be polyolefin based or the fibers and fabrics embedded in polyolefins. In the most preferred scenario should be polypropylene based or the fibers should be embedded in polypropylene.

The process can be carried out with an elaborated program of pressure, temperature and time to achieve a sufficient level of consolidation considering suitable conditions for heating, consolidation and annealing and considering the control of the strain in the material. The process can be executed batch wise or continuously.

The laminating may be carried out with the known technologies including, thermal lamination, ultrasonic lamination, Radio Frequency welding, vibration welding, electrostatic welding, laser welding, adhesive lamination, microwave lamination, induction heated lamination, infrared heated lamination.The method may further comprise as step of cutting the cross-ply laminates in the form and size desired for the cross-ply panel before stacking. Optionally the cross-ply panels can be cut after the consolidation and annealing of full length panels.

Optionally surface treatments can be implemented to improve the functionality of the panels or to facilitate the adhesion of aesthetic or functional skin films. Each or some of the film layers then can also be surface treated to improve the bond between the different material of the hybrid composite, using Corona, Plasma, flame and chemical surface treatment techniques.

### Cross-ply panel obtainable by the method of the present invention

The invention is also directed to a cross-ply panel obtainable by this method.

### Composition for preparing a machine direction oriented film, a tape or a fiber

The invention is further directed to a composition for preparing a machine direction oriented film, a biaxially oriented film, a tape or a fiber. The composition comprises a post-consumer polymer resin, a beta-nucleating agent, an elastomer and optionally a virgin polymer resin.

The composition may comprise the post-consumer polymer resin, the beta-nucleating agent, the elastomer and optionally the virgin polymer resin in a form such as intimately mixed or compounded with each other. Alternatively, the composition may have a layered structure, especially a structure wherein each layer comprises the different amounts of the constituents.

A post-consumer material is a material generated by households or by commercial, or industrial and institutional facilities in their role as end-users of the product which can no longer be used for its intended purpose. This includes returns of material from the distribution chain.

The post-consumer polymer resin may be a post-consumer polypropylene homopolymer resin, a post-consumer copolymer polyolefin resin, a post-consumer terpolymer polyolefin resin or a mixture of two or more thereof. The post-consumer polypropylene homopolymer resin may comprise minor amounts (such as less than 15 wt.-%, preferably less than 2 wt.-% based on the total weight of the polypropylene homopolymer resin) of other types of polypropylene, other polyolefins or other thermoplastics such as polystyrene, polyethylenterephthalate, acrylonitrile-butadiene-styrene (ABS), high impact polystyrene, or polyamide.

The post-consumer polymer resin may be obtained, for example from recycling, preferably be recovered from closed loop or open loop recycling, of polymer from the production processes of the following products, from a source selected from the group consisting of woven transportation bags, packaging bags from oriented polypropylene filaments, geomembranes, machine direction oriented films, biaxially oriented films , unoriented films, polypropylene fibers, polypropylene ropes, rafia products, non-alpha-nucleated sources and a mixture of two or more thereof. Other non-polymeric impurities such as soil, wood or residues coming from etiquettes and labels, same as other impurities from crossed contamination during the collection recycling process can also be present in the recyclates.

The post-consumer polymer resin may not be alpha-nucleated.

The post-consumer polymer resin may have a melt flow rate of 0.5 to 6 g/10 min, as determined in accordance with ASTM D1238 at 230° C. and 2.16 kg. By blending resins with different MFR and/or applying chain extension, one can end up in the desired rheology.

The beta-nucleating agent may be selected from the group consisting of a metal phthalate, a metal salt, a metal hydrophthalate, dicarboxylic acid derivative type diamide compounds from C₅-C₈-cycloalkyl monoamines or C₆-C₁₂-aromatic monoamines and C₅-C₈-aliphatic dicarboxylic acid, C₅-C₈-cycloaliphatic dicarboxylic acid or C₆-C₁₂-aromatic dicarboxylic acid or mixtures thereof.

The elastomer may be selected form the group consisting of an olefin block copolymer, an unsaturated elastomer, a reactive compatibilizer or mixture of two or more thereof, preferably an olefin block copolymer. The elastomer may be a crosslinkable elastomer, especially may be unsaturated and/or may have a small content of peroxide, preferably may not comprise peroxide.

The term "olefin block copolymer" or "OBC" may mean an ethylene/a-olefin multi- block copolymer and includes ethylene and one or more copolymerizable a-olefin comonomer in polymerized form, characterized by multiple blocks or segments of two or more polymerized monomer units differing in chemical or physical properties.

When referring to amounts of "ethylene" or "comonomer" in the copolymer, it is understood that this means polymerized units thereof. In some embodiments, the multi-block copolymer can be represented by the following formula:

(AB)ₙ

where n is at least 1, preferably an integer greater than 1, such as 2, 3, 4, 5, 10, 15, 20, 30, 40, 50, 60, 70, 80, 90, 100, or higher, "A" represents a hard block or segment and "B" represents a soft block or segment. Preferably, As and Bs are linked in a substantially linear fashion, as opposed to a substantially branched or substantially star- shaped fashion. In other embodiments, A blocks and B blocks are randomly distributed along the polymer chain. In other words, the block copolymers usually do not have a structure as follows.

AAA-AA-BBB-BB

In still other embodiments, the block copolymers do not usually have a third type of block, which comprises different comonomer(s). In yet other embodiments, each of block A and block B has monomers or comonomers substantially randomly distributed within the block. In other words, neither block A nor block B comprises two or more sub-segments (or sub-blocks) of distinct composition, such as a tip segment, which has a substantially different composition than the rest of the block.

Preferably, ethylene comprises the majority mole fraction of the whole block copolymer, i.e., ethylene comprises at least 50 mole percent of the whole polymer. More preferably ethylene comprises at least 60 mole percent, at least 70 mole percent, or at least 80 mole percent, with the substantial remainder of the whole polymer comprising at least one other comonomer that is preferably an a-olefin having 3 or more carbon atoms. In some embodiments, the olefin block copolymer may comprise 50 mol to 90 mol ethylene, preferably 60 mol to 85 mol , more preferably 65 mol to 80 mol . For many ethylene/octene block copolymers, the preferred composition comprises an ethylene content greater than 80 mole percent of the whole polymer and an octene content of from 10 to 15, preferably from 15 to 20 mole percent of the whole polymer.

The olefin block copolymer includes various amounts of "hard" and "soft" segments. "Hard" segments are blocks of polymerized units in which ethylene is present in an amount greater than 95 weight percent, or greater than 98 weight percent based on the weight of the polymer, up to 100 weight percent. In other words, the comonomer content (content of monomers other than ethylene) in the hard segments is less than 5 weight percent, or less than 2 weight percent based on the weight of the polymer and can be as low as zero. In some embodiments, the hard segments include all, or substantially all, units derived from ethylene. "Soft" segments are blocks of polymerized units in which the comonomer content (content of monomers other than ethylene) is greater than 5 weight percent, or greater than 8 weight percent, greater than 10 weight percent, or greater than 15 weight percent based on the weight of the polymer. In some embodiments, the comonomer content in the soft segments can be greater than 20 weight percent, greater than 25 weight percent, greater than 30 weight percent, greater than 35 weight percent, greater than 40 weight percent, greater than 45 weight percent, greater than 50 weight percent, or greater than 60 weight percent and can be up to 100 weight percent. The soft segments can be present in an OBC from 1 weight percent to 99 weight percent of the total weight of the OBC, or from 5 weight percent to 95 weight percent, from 10 weight percent to 90 weight percent, from 15 weight percent to 85 weight percent, from 20 weight percent to 80 weight percent, from 25 weight percent to 75 weight percent, from 30 weight percent to 70 weight percent, from 35 weight percent to 65 weight percent, from 40 weight percent to 60 weight percent, or from 45 weight percent to 55 weight percent of the total weight of the OBC. Conversely, the hard segments can be present in similar ranges. The soft segment weight percentage and the hard segment weight percentage can be calculated based on data obtained from DSC or NMR. Such methods and calculations are disclosed in, for example, U.S. Patent No. 7,608,668, entitled "Ethylene/a-Olefin Block Inter-polymers," filed on March 15, 2006, in the name of Colin L. P. Shan, Lonnie Hazlitt, et. al. and assigned to Dow Global Technologies Inc., the disclosure of which is incorporated by reference herein in its entirety. In particular, hard and soft segment weight percentages and comonomer content may be determined as described in Column 57 to Column 63 of US 7,608,668.

The term "virgin" as used herein refers to a material not discarded by end users but rather generated during a manufacturing process. Virgin polyolefin is a polyolefin manufactured from natural resources such as petrochemical feedstock, crude oil, natural gas, biobased feedstock, etc. It is the purest form of polyolefin. It can also be said that this is the unprocessed form of polyolefin. It possesses all original properties.

The virgin polyolefin may be selected from the group consisting of a polyethylene, a polypropylene homopolymer, a copolymer polyolefin, a terpolymer polyolefin or a mixture of two or more thereof. It is explicitly provided that the virgin polyolefin may be a blend of two or more selected from the group consisting of a polypropylene homopolymer, a copolymer polyolefin, and a terpolymer polyolefin. The copolymer polyolefin may be a copolymer of ethylene and propylene. The terpolymer polyolefin may be a polymer of three or more selected from the group consisting of ethylene, propylene, butene, hexene, octene, vinyl acetate, and glycidyl methacrylate, preferably of ethylene, propylene, and one selected from the group consisting of butene, hexene, octene, vinyl acetate, and glycidyl methacrylate.

The virgin polyolefin may have a melting temperature from 110 to 180°C.

### Product

The invention is further related to a product comprising the cross-ply laminate according to the invention, the cross-ply panel according to the invention, the composition according to the invention, or a machine direction-oriented film obtainable by the composition according to, especially a product containing a component of a modified post-consumer recyclate with enhanced drawability.

The product may be a component or product in automotive; aerospace; marine; logistics, such as a cargo container; consumer good, such as sports good, luggage; electric and electronic component or product; component or product in solar or wind energy application; material for building and infrastructure; component or product in orthotics; ballistic component or product; component or product in impact, stab and personal protection; industrial packaging, such as crates.

The preparation of the product may include conversion of cross-ply panel into products using techniques like thermoforming, vacuum forming, plug assisted thermoforming, and compression molding. Finishing operations like slitting, cutting and welding to form the desired products and combining with other final assembly components such as a vehicle, PV panel, geomembrane, big bag, concrete reinforcement and ropes may also be foreseen.

Wide MDO films, especially those comprising PCR, can be slit or used in their original width into narrower films and filaments which can be used to reinforce polymeric and non-polymeric materials in structures. E.g., filament winding of pipe and tanks, and concrete reinforcement.

The invention is also related to a product comprising the cross-ply laminate or the composition according to the present invention, especially a modified post-consumer recyclate with enhanced drawability, wherein the product is selected from the group consisting of: the MDO films building block of the cross ply laminates and panels above described, the conventional films and filaments for commercial woven self-reinforced PP , in films and filaments for big bags, in films and filaments for geomembranes, in filaments for braided ropes, in general purpose oriented films, fibers, tapes and panels.
(I) The cross-ply laminate according to the invention can preferably be used
   1) As a panel, preferably as a component in a solar module, or as a component in impact or ballistic protection and in transportation applications or in general purpose panels.
   2) As a skin of sandwich and other light weight and flexible applications, especially in solar modules, automotive, and aerospace and, in general, in transportation components or in general purpose components;
   3) As a thermoformed component, especially in solar modules, electric/electronic appliances, automotive, aerospace and in general transportation components, or suitcases. Also, in general purpose components
(II) The composition according to the present invention can preferably be in conventional SRPP, in big bags, in geomembranes, in braided ropes, in oriented films, in fibers or in tapes.

### DESCRIPTION OF THE DRAWINGS

Fig. 1 shows schematically a process for preparing a cross-ply laminate according to the invention and then preparing a cross-ply panel from the cross-ply laminate in a top-view perspective.
Fig. 2 shows schematically a multilayer film with ABA structure in side view.
Fig. 3 Shows an optical microscopy images of a film cross-sections with a film architecture AB'CB'A. C is the middle layer containing the recycled compounds.

In the process schematically shown in Fig. 1, a polypropylene (PP) based composition 1 comprising a mixture of virgin polypropylene and a post-consumer polypropylene resin is formed into a first film 2. The first film 2 has a width 2a of 40 cm and a thickness of about 400 µm (not shown) and a length 2b.

The first film 2 is processed by machine direction processing, in a two stage stretching process, including heating the film to a temperature slightly below the melting point of the film and stretching in the machine direction to form a first machine direction oriented film 3. The first machine direction-oriented film 3 has a thickness of 50 µm and a width of 16 cm.

In the embodiment shown in Fig. 1, a series of further machine direction-oriented films 3a, 3b, etc. to 3N are aligned side by side to film 3.

A layer of one or more aligned second films (3', 3a', 3b'... 3M') ( which are of the same kind as the first film 3) is arranged in 90 ° orientation on top of the machine direction array of first films 3, 3a, 3b, ...3N. In this way the cross ply 0°/90° laminate 4 is produced. Considering an array of 5 films in machine direction, with each film having a width of 16 cm and thickness of 50 µm, the cross-ply laminate 4 will have approximately a width of 80 cm and a thickness of 100 µm

The second layer of films (3', 3a', 3b',... 3M') can also be arranged optionally to any orientation between 0° and 90°. For example, at 15° to produce cross ply 0°/15° laminates. Then the 0°/90° cross ply laminates will have approximately a length of 3M times the width of film 3 and a width of approximately N times the width of film 3.

The cross-ply laminate 4 is cut into cross-ply laminate pieces 4a, 4b, 4c and 4d of e.g., 100 cm length. The cross-ply laminate pieces 4a, 4b, 4c and 4d have a thickness of 100 µm, a width of 80 cm. The cross-ply laminate pieces 4a, 4b, 4c and 4d and further cross-ply laminate pieces (not shown) are stacked and pressed/laminated to form a cross-ply panel 5. The cross-ply panel has a thickness of 1 mm, a width of 64 cm and a length of 100 cm.

### EXPERIMENTAL PART

### Measurement methods

| **Test** | **Standard** |
|---|---|
| Tensile Testing (Tensile Properties) | ISO 527 |
| Instrumented Falling Weight ( Impact ) | ISO 7765-2 |
| DSC- Melting point, Crystallization temperature (Thermal properties) | ISO 11357-3: |
| DMA, Storage Modulus (E'). | ISO 6721/Single Cantilever Bending Mode |

The ISO standards are those in the version applicable at the priority date of the present disclosure.

### Materials

### Homo polypropylene virgin (in Core layer)

PPH1: Ineos 100 GA02
PPH13: Ineos 100 GA04
PPH12: SCG P400S

### Terpolymer polyolefin virgin (in Adhesive layer)

PPR2: LyondellBasell Moplen RP340H
PPR6: Ineos Eltex KS409
PPR8: LyondelBassell Adsyl 6 C 30F

### PP Post consumer recyclate (in Core Layer ):

PCR6: Polypropylene recyclate from the end of life of big bags (industrial packaging) MFI 3-7 g/10 min (at 2.10 Kg/230C)

### Additives:

### Beta nucleator:

MOD1: Mayzo MPM 2000

### Other Modifiers:

MOD2(0) : Nordic Grafting Company 09MA18
MOD2 : Dow Infuse^{™} 9077
CST: Calcium stearate compounding grade
AO: BASF Irganox^{®} B 215
AF: Optional, other additives to improve complementary performances.

### Compounding and upgrading

Compounds are prepared to incorporate beta nucleators and modifiers to the components of the films.

### Virgin Compounds for adhesive layer

PPR6 and PPR8 are compounded between 160 and 210°C optionally with AO and AF in the single screw extruders feeding the monolayer and multilayer film extrusion lines. Alternatively, when compounding demand improved dispersion, the production can be performed in twin screw extruders previously to film extrusion. The extruders and extrusion conditions will be described in the next section. The resulting compounds converted online into film are named in the following way (the content in wt% is given in brackets for the minor components and the content of the major component is the subtraction content of the remaining components)

| **Full name of compound and composition** |
|---|
| PPR6 |
| PPR8 |

### Virgin Compounds for core layer

PPH1, PPH6 and PPH12 are compounded with Nucleating agents, and optionally with AO and AF in the single screw extruders feeding the monolayer and multilayer film extrusion lines with melt temperatures in the range of 210-240°C. The extruders and extrusion conditions will be described in the next section. The resulting compounds converted online into film are named in the following way (the content in wt% is given in brackets for the minor components and the content of the major component is the subtraction content of the remaining components)

The compounds used in the different examples are the following (the composition is reflected in the name)

| **Full name of compound and composition** | **Abbreviated Name** |
|---|---|
| PPH1 MOD1 (2%) | PPH1 MOD1 |
| PPH6 MOD1 (2%) | PPH6 MOD1 |
| PPH18 MOD1 (2%) | PPH18 MOD1 |

### Compounds with PCR% for core layer

PCR6 is compounded with Nucleating agents, modifiers, and other stabilizers in a Coperion ZSK 26 twin screw extruder, D26mm, L/D 35 at a reference melt temperature of 210 °C. The extruder is connected to a melt filter with screen of opening size 120 µm to remove from the melt most of the hard insoluble impurities of the recyclate.

| **Full name of compound and composition** | **Abbreviated Name** |
|---|---|
| PCR6 MOD1 (2%) CST(0,1%)AO (0,05%) | PCR6 MOD1 |
| PCR6MOD1(2%)MOD2-0(4%)CST(0,1%)AO (0,05%) | PCR6 MOD1 MOD2-0 |
| PCR6MOD1(2%) MOD2(4%) CST(0,1%)AO (0,05%) | PCR6 MOD1 MOD2 |

### Preparation of unoriented films:

### Monolayer films:

Monolayer films are extruded in an PM extruder using melt temperatures between 210°C and 230°C. For films beta nucleators a Temperature at the die above 200°C is secured and the chill roll set to 90°C. For films with no beta nucleators the chill roll is set to 40°C. The film is extruded at a speed between 1 and 5 m/min and trimmed to a width of 30 cm , the typical characteristic thickness measured by mid-width is between 300µ to 500µ.

Film rolls are stored at -25°C and processed by MDO no later than 1 week after extrusion.

The PLAST MASKINEN pilot scale line (PM Line) is a cast extrusion line, equipped with a barrier screw D= 30mm L/D:25, winder up to 38 cm (lay flat), edge trimming with a max output of 25kg/h.

### Multilayer films

Multilayer films are extruded in a multilayer (7 extruder) cast extrusion Collin line. Temperatures for the different extruders, the feed block and die temperatures are selected considering the rheology of each of the layers and are typically between 160°C and 250°C. The tailoring of the extrusion conditions has a significant influence in the drawability of the films in the subsequent MDO processing. For films with beta nucleators a Temperature at the die above 200C is secured and the chill roll set to 80°-90°C. For films with no beta nucleators the chill roll is set to 40°C. The film is extruded at a speed between 1 and 5 m/min and trimmed to a width of 40 cm, the typical characteristic thickness measured by mid-width is between 300µ to 500µ and the specific thickness of the sublayers is measured in the final film.

The multilayer Collin Line is a pilot scale machine equipped with 7 extruders (5 × 25mm and 2× 30mm) with barrier screws and gravimetric feeding single screw extruders integrated via feed block. Film thickness up to 2,5mm, winder up to 55 cm (lay flat) and a maximum output of 75 kg /h.

### Preparation of machine direction oriented film (MDO Film)

The process to produce MDO films comprises a two-step MDO process which can be performed in a MDO machine with online Double MDO or by the offline Double MDO by processing two times the film in a single MDO machine with optionally two different MDO programs for each stage. Here the samples are produced using the second approach.

A typical MDO Stage 1 implements a draw ratio typically X1= 6.5. It starts from the unwinding of the film and heated from room temperature to a max roller temperature, typically 90°C or 110°C and then cooled down using roller temperature of 30°C. The film is fed into the second stage within 2 hours or stored in freezer at -25°C for maximum one week.

The MDO Stage 2 implements a draw ratio typically X2 between 1,5 X to 2,8X. It starts from the unwinding of the film with a speed between 1 to 10 m/min, then the film is heated from room temperature to a max roller temperature, typically 150°C then cooled down using roller temperature of 30°C.

The actual film temperature is not controlled, only the temperature of the rollers. The total draw ratio X is calculated as X= X1. X2

The films of typical thickness between 300 to 400 µm result in thickness between 45µm and 60µm depending on the actual draw ratio X. The width is trimmed during the first MDO step resulting in targeted widths of about 12 cm and 16 cm. The Hosokawa Alpine MDO Line is a full-scale mono directional orientation line for up to 2m wide film and 250 m/min winder speed. The line has a 11 roller stack (4 heating rolls, 2 stretching rolls (single stage orientation), 2 annealing and cooling rolls). The line is connected to an upstream unwinder and downstream winding with automatic change of roll. The machine allows tailoring the temperature, roller speed and film tension to complete a suitable MDO program for the film sample.

### Preparation of cross-ply laminate

### Manual cross-ply lamination:

Manual cross-ply lamination is performed by cutting MDO films of 16 cm width to a length equal to their width and piling a second layer on 90° orientation.

### Continuous Cross-ply lamination:

The operation is performed in a continuous cross ply lamination machine MAX from Van Wees (Netherlands). The continuous cross ply lamination is performed by aligning a number of film widths. As an example: Using a 16 cm film, 4 films are aligned to complete 64 cm width cross plies. A cross ply layer is installed automatically and bonded by electrostatic charging. The cross-ply speed is of 4 film widths per minute or 64 cm/min. The cross-plies are cut to a length of 70 cm to result in cross plies of 64 × 70 cm.

### Preparation of cross-ply panel

### Hot Pressing on conventional Hot Press:

Piles of a number of cross-plies to reach 1mm or 1.5 mm are placed in a hot press. The pressing temperature is chosen between 130 and 160 °C and the specific pressures of about 30 bar. The pressing time spans from 5 minutes to 15 minutes.

Vacuum pressing on Vacuum table.

Piles of several cross-plies to reach 1 or 1.5 mm thickness are placed in a Vacuum table at 90°C. The vacuum is implemented, and the temperature is increased to 130°C or 140°C and maintained for 20 minutes and then cooled down to 90°C. The cooling is completed at room conditions.

### Test results

### Example 1 - Proof of concept of SRPP (fully virgin) and SRPP (with PCR%) with the novel process from full width films

### Preparation of Multilayer unoriented films by cast film Coextrusion:

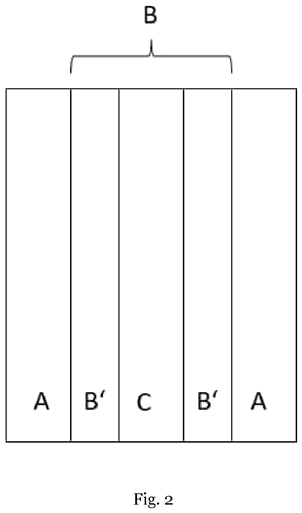

Films are produced by cast coextrusion in a 7 layer COLLIN cast film line. Films comprise an ABA structure (see Fig 2). A is a polyolefin copolymer of propylene of low melting point that will work as adhesive layer at the time of cross-ply lamination. B is based on Homo PP. This is the reinforcing layer. In this layer the modifiers MOD1 are incorporated by compounding directly at the time of film extrusion. B can also be split into 3 or more sub-layers B' and C to incorporate PP PCR.
- Layer B can comprise one or more actual layers of reinforcing layer comprising mainly homo PP. The B layer can also be described as a multilayer B= B'CB' and constitute and AB'CB'A
- Layer A is the skin adhesive layer to facilitate lamination at low temperature and comprises preferably PP copolymers.

The multilayer layer films produced are described in the following table. The target thickness which reflects the mass balance fed to the extruders is presented in the following table. The final total thickness varies all over the cross section +/- 15%. The films are trimmed to a width of 40cm. The composition, architecture and main conditions for processing of the PREFILMS produced by cast multilayer extrusion is given in the following table. PPH1 was compounded, with MOD1(2%) in the single screw extruders of the cast film line. On the other hand PCR6 was compounded with CST(0,1%)AO (0,05%) and melt filtered with 120µ using a Twin Screw extruder Coperion ZSK 26 coupled to a melt filter.

| **PREFILM** | **Descriptor** | **A (µm)** | **B` (µm)** | **C (µm)** | **B` (µm)** | **A (µm)** | **Architecture** |
|---|---|---|---|---|---|---|---|
| PREFILM 10B.1 (for MDO201) | Virgin | 30 | 100 | 100 | 100 | 30 | AB'B'CB'B'A |
| PREFILM 11.2 (for MDO 304) | Virgin MOD1 | 30 | 100 | 100 | 100 | 30 | AB'B'CB'B'A |
| PREFILM 11.4 (for MDO 273) | Virgin PCR MOD1 | 30 | 75 | 150 | 75 | 30 | AB'B'CB'B'A |

| PREFILM (CAST FILM) | **Descriptor** | A Material | B' Material | C Material | Extrusion conditions |
|---|---|---|---|---|---|
| PREFILM 10B.1 (for MDO 201) | Virgin | PPR8 | PPH1 | PPH1 | Melt temperatures between 170°C and 215°C |
| PREFILM 11.2 (for MDO 304) | Virgin MOD1 | PPR8 | PPH1MOD1 | PPH1MOD1 | Melt temperatures between 170°C and 215°C |
| PREFILM 11.4 (for MDO 273) | Virgin PCR MOD1 | PPR8 | PPH1MOD1 | PCR6MOD1 | Melt temperatures between 170°C and 215°C |

• **MDO Orientation:** Films produced by cast coextrusion are stretched by MDO in an offline double stage to levels of stretching (10 to 15X) right before rupture. Four films need to be considered (as described in the following table). A reference Virgin (Modified), Virgin MOD 1 (virgin modified with MOD1), and two films with PCR% Virgin PCR MOD1. A film thickness of about 55µm was achieved. Also, MDO films were trimmed after stage 1 to result in a film width of about 16 cm after the second stage.
MOD1 results first in enhancing the drawability of the virgin material (MDO 201 vs MDO 304). MDO films 201,304 and 273 can be understood as the films obtained to a maximum draw ratio before rupture.

| **MDO Film** | **Descriptor** | **Total Draw Ratio** | **Characteristic Max Temperature** | **Characteristic Max Temperature** |
|---|---|---|---|---|
| | | | **Stage 1** | **Stage 2** |
| | | | **(°C)** | **(°C)** |
| MDO 201 | Virgin | 11,22 | 110 | 150 |
| MDO 304 | Virgin MOD1 | 11,55 | 110 | 150 |
| MDO 273 | Virgin PCR MOD1 | 12,59 | 110 | 150 |

• **Crossply Panels:** Laminates of 8 layers in crossply (0/90) are produced by hand lay up from the films described in the table above(MDO 201, 304, 273) are pressed as laminates(~0,32-0,40 mm thickness in cross-ply 0/90 alternating orientation) and compared to commercial SRPP C1 (CURV from PROPEX) laminate (~0,36 mm thickness). All panels are pressed at 130°C and 300 N/cm2).
The tensile characterization of the laminates is given in the following table. When comparing to commercial SRPP all experimental laminates containing modifiers both from Virgin and PCR content show similar or better performance than the commercial SRPP laminates.

### Tensile properties of experimental cross-ply panels and commercial SRPP (ISO 527-4)

| PANEL ALIAS | MDO film pressing Temperature | Tensile modulus (MPa) | stdev | Tensile strength (MPa) | stdev | Strain at break (%) | stdev |
|---|---|---|---|---|---|---|---|
| Virgin | MDO 201 / 130°C | 3314 | 203 | 119,4 | 5,3 | 16,8 | 1,0 |
| Virgin MOD1 | MDO-304 / 130°C | 3869 | 254 | 190,6 | 8,3 | 23,7 | 1,5 |
| PCR MOD 1 | MDO-273 / 130°C | 3709 | 307 | 182,6 | 15,5 | 21,5 | 0,8 |
| Commercial SRPP | SRPP C1 | 3568 | 55 | 165,8 | 3,1 | 19,5 | 0,6 |

The results on the Impact performance, as portrayed by Instrumental falling weight at 23°C, are presented in the following table. The data sets show consistent results to the Tensile characterization previously presented. Here, all experimental materials perform better than commercial SRPP and virgin laminates from film MDO 304 (VIRGIN MOD1) show the best impact performance followed by films with PCR% MDO 273 (PCR MOD1). It is an important highlight that it is found an unexpectedly high level of improvement. Notice that in the tensile results improvements 10-20% can be claimed over the commercial material. Here the impact parameters are improved from 50% to 200% in Peak force and Energy at peak force. Notice that Total Energy is higher in VIRGIN MOD1 in 45X vs commercial materials.

### Instrumental falling weight of cross-ply panels @23°C (IFW-ISO 7765-2)

| PANEL ALIAS | | Peak Force (N) | Energy at peak force (J) | Total Energy (J) |
|---|---|---|---|---|
| MDO 201 | Avg | 2550 | 8,5 | 9,7 |
| VIRGIN | Std | 465 | 2,10 | 2,10 |
| MDO 304 | Avg | 4120 | 17,4 | 18,2 |
| VIRGIN MOD1 | Std | 292 | 2,5 | 2,2 |
| MDO 273 | Avg | 2940 | 11,0 | 11,6 |
| PCR MOD 1 | Std | 268 | 1,9 | 1,7 |
| SRPP C1 | Avg | 2030 | 6,8 | 0,4 |
| Commercial SRPP | Std | 83 | 0,3 | 0,03 |

### EXAMPLE 2- Proof of concept on upgrading and optimization of PCR PP compositions (With MOD 1 and MOD 2) for film, fiber/filament and orientation processes

PCR6-MOD1 in ABA films has black impurities of polymeric origin that result in the main source for rupture of the films during MDO orientation. The impurities cannot be melt filtered as even the repeated melt filtration with screens of lower gap (120/80/40µm) has proven unsuccessful and impurities re-agglomerate in large clumps ~500µm.

### EXAMPLE 2A

In order to mitigate rupture caused by the impurities in PCR a second type of additives (MOD2) were tested. The additives were incorporated by melt compounding and layer extruded into monolayer cast film for testing.

### Compounding and Melt filtration:

Samples of PCR6 were compounded at 210°C with 2wt%MOD1 and 4wt% of MOD2(o) (Nordic Grafting Company 09MA18) or MOD2 : Dow Infuse^{™} 9077 in a Coperion ZSK 26 at 210C and thereafter melt filtered with 120µm screens. The resulting compounds are presented in the following table

| **Full name of compound and composition** | **Abbreviated Name** |
|---|---|
| PCR6 MOD1 (2%) CST(0,1%)AO (0,05%) | PCR6 MOD1 |
| PCR6MOD1(2%)MOD2-0(4%)CST(0,1%)AO (0,05%) | PCR6 MOD1 MOD2-0 |
| PCR6MOD1(2%) MOD2(4%) CST(0,1%)AO (0,05%) | PCR6 MOD1 MOD2 |

### Monolayer film Extrusion

Monolayer Cast Films from the compounds produced in the previous stage and a reference with virgin PP PPH1MOD1 were extruded at 210C and cooled in a chill roll at 90C. Films of about 300µm were trimmed to 30 cm. The following PREFILMS were produced.

| **PREFILM** | **Abbreviated Name** |
|---|---|
| PREFILM 15.1 | PCR6 MOD1 |
| PREFILM 15.3 | PCR6 MOD1 MOD2-0 |
| PREFILM 15.2 | PCR6 MOD1 MOD2 |
| PREFILM 2.1 | PPH1MOD1 |

### MDO processing

MDO processing was performed following a similar stretching program as in Example 1 resulting in films of about 16cm and thickness of about 50µm. In all cases films are driven to a strain close to rupture. Here it is important to highlight that the overall stretchability of films is higher in monolayers than in multilayers as it is speculated that monolayers have higher thickness homogeneity both on machine and transverse directions.

On the other hand, it is clearly seen that the combination PCR6MOD1MOD2 results in a film of comparable or better stretchability than virgin MDO485 PPH1MOD1, so the failure of the multilayer films can be expected to be limited by the Virgin component and not by the PCR component as previously observed.

### MDO stretching of monolayer films of virgin and PCR PP (Tensile testing by ISO 527-4)

| **MDO Film** | **Descriptor** | **Tensile Modulus (ISO 527-3) (MPa)** | **Total Draw Ratio** | **Characteristic Max Temperature** | **Characteristic Max Temperature** |
|---|---|---|---|---|---|
| | | | | **Stage 1 (°C)** | **Stage 2 (°C)** |
| MDO 455 | PCR6 MOD1 | 5062 ± 325 | 12,59 | 110 | 150 |
| MDO 475 | PCR6 MOD1 MOD2-0 | 5298 ± 111 | 12,59 | 110 | 150 |
| MDO 466 | PCR6 MOD1 MOD2 | 6012 ± 319 | 15,44 | 110 | 150 |
| MDO 2.1-3 | PPH1MOD1 | 8340 ± 224 | 14,73 | 110 | 150 |

### EXAMPLE 3- Proof of concept on SRPP with High PCR content (With PCR upgraded with MOD 1 and MOD 2)

PCRMOD1MOD2 (produced by the compounding of PCR6 including MOD1 and MOD2 and melt filtration as in example 2A) is incorporated in multilayer films that upon MDO processing result in MDO 462 and 469 which are later converted by pressing into Cross-ply Panels

The details about the processing from compounding down to panel pressing are shown in the following.

### Multilayer Cast Extrusion

| **PREFILM** | **Descriptor** | **A (µm)** | **B' (µm)** | **C (µm)** | **B' (µm)** | **A (µm)** | **Architecture** |
|---|---|---|---|---|---|---|---|
| PREFILM 16-1 (for MDO462) | PCRMOD1MOD2 | 30 | 75 | 150 | 75 | 30 | AB'B'CB'B'A |
| PREFILM 16-1 (for MDO 469 ) | PCRMOD1MOD2 | 30 | 100 | 100 | 100 | 30 | AB'B'CB'B'A |

| PREFILM (CAST FILM) | **Descriptor** | A Material | B' Material | C Material | Extrusion conditions |
|---|---|---|---|---|---|
| PREFILM 16.1 (for MDO 462) | Virgin MOD1 | PPR6 | PPH13MOD1 | PCR6MOD1MOD2 | Melt temperatures between 200°C and 215°C |
| PREFILM 16.1 (for MDO 469) | Virgin MOD1 | PPR6 | PPH13MOD1 | PCR6MOD1MOD2 | Melt temperatures between 200°C and 215°C |

### MDO processing

| **MDO Film** | **Descriptor** | **Total Draw Ratio** | **Characteristic Max Temperature** | **Characteristic Max Temperature** |
|---|---|---|---|---|
| | | | **Stage 1** | **Stage 2** |
| | | | **(°C)** | **(°C)** |
| MDO 462 | PCR MOD1MOD2 | 12,59 | 120 | 150 |
| MDO 469 | PCRMOD1MOD2 | 14,01 | 120 | 150 |

### Production of Cross-ply Panels

Laminates of 8 layers in cross-ply (0/90) are produced by hand lay up from the films described in the table above(MDO 462, 469) are pressed as laminates (~0,32-0,40 mm thickness in cross-ply 0/90 alternating orientation). All panels are pressed at 130°C and 300 N/cm²).

### Example 3A

The usefulness of the modification in the new MDO films 462 and 469 can be seen in comparison to MDO273 from Example 1 and MDO 462 from the following table. At comparable draw ratio, the new MDO462 shows some enhancements on the mechanical properties. But remarkably the processability is enhanced by decreasing the frequency of breakage during MDO processing.

### Characterization of multilayer stretched films with PCR content: MOD1 vs MOD1MOD2 modifications (Tensile testing by ISO 527-4)

| | | |
|---|---|---|
| **Virgin MOD Film** | **PCRMOD1** | **PCRMOD1MOD2** |
| | **MDO 273** | **MDO 462** |

| Breakage frequency | Random every 50-200m | No breakage in 6ooom run |
|---|---|---|
| Tensile Modulus (MPa) MD | 4744 (104) | 5332 (371) |
| Tensile Strength (MPa) MD | 390 (29) | 415 (33) |
| Tensile Modulus (MPa) TD | 1076(15) | 1064 (16) |
| Tensile Strength (MPa) TD | 27(1) | 24 (1) |
| Comparative Draw ratio | 1 | 1 |

### EXAMPLE 3B Films of Enhanced stretchability and quantification of PCR%

The material in MDO FILM 462 (PCR MOD1 MOD1) presents a high stretchability and allows higher draw ratio, then MDO FILM 469 is produced with higher draw ratio. Here MDO FILM 469 is the maximum achievable draw ratio before rupture. It is about 11% higher than that of RUN 462 resulting mainly in improved Tensile modulus, in expenses of Tensile strength in machine direction.

### Characterization of films with PCR content with enhanced drawability and enhanced mechanical properties (Tensile testing by ISO 527-4, PCR % by light microscopy)

| | **PCRMOD1MOD2** | **PCRMOD1MOD2** |
|---|---|---|
| **Film** | **MDO 462** | **MDO469** |
| Tensile Modulus (MPa) MD | 5332 (371) | 6130 (85) |
| Tensile Strength (MPa) MD | 415 (33) | 403 (22) |
| Tensile Modulus (MPa) TD | 1064 (16) | 1056(9) |
| Tensile Strength (MPa) TD | 24 (1) | 22(3) |
| Comparative Draw ratio | 1 | 1,11 |
| PCR% by Mid Width | ∼53% | ∼48% |

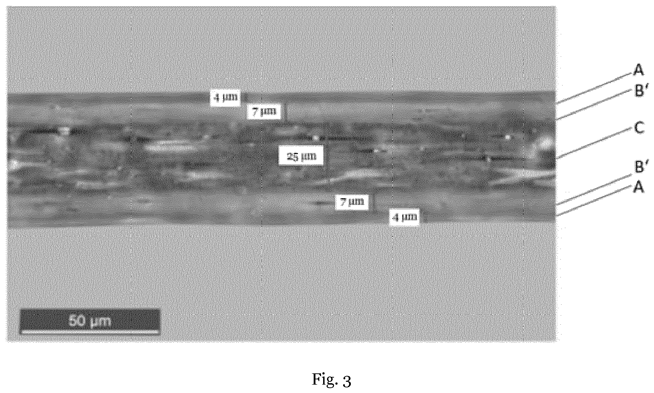

Also the PCR content is estimated from optical microscopy images (see Fig. 3) from the thickness of the PCR mid-layer to the total thickness of the film by mid - width. This is showing that the PCR content in all images reveals an average value of about 50%.

**EXAMPLE 3C Crossply laminates:** Crossply laminates by manual lay-up were pressed at 130°C with MDO films 462 and 469. The pressed panels reflect the benefit of the enhanced drawability by the MOD1 MOD2 combination in films MDO 462 and 273 in the tensile modulus. These values can be compared to the values originally presented in Example1 from MDO film 273.

### Tensile properties of experimental cross-ply panels (ISO 527-4)

| PANEL ALIAS | Total Draw Ratio | MDO film | Tensile modulus (MPa) | stdev | Tensile strength (MPa) | stdev | Strain at break (%) | stdev |
|---|---|---|---|---|---|---|---|---|
| | | Pressing Temperature | | | | | | |
| PCR MOD 1 (Example 1) | 12,5 | MDO 273 130°C | 3709 | 307 | 182 | 15 | 21 | 0,8 |
| PCRMOD1MOD 2 | 12,5 | MDO 462 / 130°C | 4158 | 387 | 169 | 33 | 10 | 1,2 |
| PCR MOD1MOD2 | 14,0 | MDO 469 130°C | 4437 | 369 | 149 | 22 | 9 | 0,8 |

### EXAMPLE 4: PRODUCTION OF CROSSPLY PANELS BY AUTOMATIC CROSSPLY LAMINATION AND VACCUM PRESSING

### Multilayer Cast Extrusion

Cast films using two different homo PP polymers namely PPH13 and PPH16 were used as core layer while PPR6 was used as skin layer. The characteristics for the production of the films are presented in the following table. Both Prefilms were trimmed to 40cm and used for MDO orientation

| **PREFILM** | **Descriptor** | **A** | **B'** | **C** | **B'** | **A** | **Architecture** |
|---|---|---|---|---|---|---|---|
| | | **(µm)** | **(µm)** | **(µm)** | **(µm)** | **(µm)** | |
| PREFILM | Virgin MOD1 | 30 | 100 | 100 | 100 | 30 | AB'B'CB'B'A |
| 13.3 | | | | | | | |
| (for MDO425) | | | | | | | |
| INEOS | | | | | | | |
| PREFILM 13.1 | Virgin MOD1 | 30 | 100 | 100 | 100 | 30 | AB'B'CB'B'A |
| (for MDO 416) | | | | | | | |
| SCG | | | | | | | |

| PREFILM | **Descriptor** | A | B' | C | Extrusion conditions |
|---|---|---|---|---|---|
| (CAST FILM) | | Material | Material | Material | |
| PREFILM 13.3 | Virgin MOD1 | PPR6 | PPH13MOD1 | PPH13MOD1 | Melt temperatures between 215°C and 230°C |
| (for MDO 425) | | | | | |
| INEOS | | | | | |
| PREFILM 13.1 | Virgin MOD1 | PPR6 | PPH12MOD1 | PPH12MOD1 | Melt temperatures between 215°C and 230°C |
| (for MDO 416) | | | | | |
| SCG | | | | | |

### MDO processing

The MDO processing was performed as in previous trials using a two stage offline process. The conditions are given in the following table. The total draw ratio for both films was 11,95

| **MDO Film** | **Descriptor** | **Total Draw Ratio** | **Characteristic Max Temperature** | **Characteristic Max Temperature** |
|---|---|---|---|---|
| | | | **Stage 1** | **Stage 2** |
| | | | **(°C)** | **(°C)** |
| MDO 425 | Virgin MOD1 | 11,95 | 110 | 150 |
| MDO 416 | Virgin MOD1 | 11,95 | 110 | 150 |

### Production of Cross-ply Laminates

Cross-ply laminates were produced in a full scale continuous cross-ply lamination machine using electrostatics to bind the installed cross-plies to the bottom films oriented in machine direction.

Four films of 200 m long, 16 cm wide MDO film were aligned in machine direction and fed to the machine. A top layer was installed automatically side to side in transverse direction to the array of four aligned films in machine direction. The films are installed with a speed of 4 film widths per minute (or 16×4 = 64 cm/minute).

### Production of Cross-ply Panels

The two layer cross-plies 0/90 was cut to lengths of 70 cm. Eleven (11) cross-ply laminates of two layer each to a total of 22 single MDO films were piled. The film pile is fed to a vacuum table in which the materials are fed at 90°C then warmed up until reaching the target temperature of 140°C and held for 30 minutes. Finally the cross- ply panels of about 64×70 cm are taken out of the vacuum table. The panels are characterized in the following table.

### Tensile properties of experimental cross-ply panels (ISO 527-4)

| PANEL | MDO Film | Descriptor | Tensile modulus (MPa) | stdev | Tensile strength (MPa) | stdev | Strain at break (%) | stdev |
|---|---|---|---|---|---|---|---|---|
| PANEL 425 (PANEL 1B) | MDO 425 | Virgin MOD1 | 3675 | 78 | 123 | 4 | 14,9 | 0,7 |
| PANEL 416 (PANEL 1A) | MDO 416 | Virgin MOD1 | 4258 | 307 | 138 | 23 | 16,5 | 1,5 |

While embodiments of the present invention have been shown and described, it will be understood by those of ordinary skill in the art that various changes in form and details may be made therein without departing from the spirit and scope of the present disclosure as defined by the following claims.

## Claims

1. A cross-ply laminate comprising one or more MDO films in machine direction, and one or more MDO films in transverse direction
wherein
- the MDO films in machine direction each have a machine direction orientation at 0°, wherein adjacent MDO films in machine direction have the same machine direction orientation;
- the MDO films in transverse direction each have an orientation between 1° and 90°, wherein adjacent MDO films in transverse direction have same transverse direction orientations;
- wherein each of the MDO films in machine direction and MDO films in transverse direction independently comprises
- a virgin polyolefin;
- a recycled polymer resin;
- a mixture of the virgin polyolefin and the recycled polymer resin; or
- a multilayer film comprising at least two sub-layers independently selected from the group consisting of a sub-layer consisting of virgin polyolefin and a sub-layer consisting of a recycled polymer resin.

2. The cross-ply laminate according to claim 1, wherein the virgin polyolefin is selected from the group consisting of a polypropylene homopolymer, a copolymer polyolefin, a terpolymer polyolefin or a mixture of two or more thereof.

3. The cross-ply laminate according to any of the preceding claims, wherein the recycled polymer resin is selected from the group consisting of a scrap polymer resin, a pre-consumer polymer resin, and a post-consumer polymer resin, preferably a post-consumer polypropylene homopolymer resin, a post-consumer copolymer polyolefin resin, a post-consumer terpolymer polyolefin resin or a mixture of two or more thereof.

4. The cross-ply laminate according to any of the preceding claims, wherein at least one of MDO films in machine direction and the MDO films in transverse direction further comprises a beta-nucleating agent.

5. The cross-ply laminate according to any of the preceding claims, wherein at least one of MDO films in machine direction and the MDO films in transverse direction further comprises an elastomer.

6. The cross-ply laminate according to any of the preceding claims, wherein at least one of MDO films machine direction and the MDO films in transverse direction is surface modified.

7. The cross-ply laminate according to any of the preceding claims, wherein at least one of MDO films machine direction and the MDO films in transverse direction has a multilayer structure

8. The cross-ply laminate according to claim 7, wherein the multilayer structure comprises
- a core layer comprising a virgin polyolefin; a recycled polymer resin; or a mixture of the virgin polyolefin and the post-consumer polymer resin as a blend or as a multilayer; and
- an adhesive layer provided on at least one surface, preferably on both surfaces, of the core layer.

9. A method for preparing a cross-ply laminate comprising the steps:
- providing a first film comprising a virgin polyolefin; a recycled polymer resin; a mixture of the virgin polyolefin and the recycled polymer resin; or a multilayer film comprising at least two sub-layers independently selected from the group consisting of a sub-layer consisting of virgin polyolefin and a sub-layer consisting of a recycled polymer resin;
- processing the first film, preferably by heating and stretching the film, to obtain a machine direction oriented film (MDO film) to be further processed by lamination oriented in machine direction (MD);
- providing a second film comprising a virgin polyolefin; a recycled polymer resin; a mixture of the virgin polyolefin and the post-consumer polymer resin; or a multilayer film comprising at least two sub-layers independently selected from the group consisting of a sub-layer consisting of virgin polyolefin and a sub-layer consisting of a recycled polymer resin;
- processing the second film, preferably by heating and stretching the film, to obtain a machine direction oriented film (MDO film) to be further installed by lamination oriented in transverse direction (TD);
- laminating the first MDO film oriented in machine direction (MF) and the second MDO film oriented in transverse direction (TD) in an angle from more than 0° to 90°, preferably about 90°.

10. A cross-ply laminate obtainable by the method according to claim 9.

11. A cross-ply panel comprising two or more cross-ply laminates according to any of the claims 1 to 8 or 10.

12. A method for preparing the cross-ply panel according to claim 11 comprising the steps:
- stacking at least two cross-ply laminates according to any of the claims 1 to 8 or 10;
- optionally adding plies of different nature to the at least two cross-ply laminates according to any of the claims 1 to 8 or 10, wherein the plies of different nature comprise at least one selected from the group consisting of mineral fibers, carbon fibers, polymer fibers, plant fibers and polymer based films with a functional or aesthetical purpose;
- pressing and/or laminating the stacked cross-ply laminates; and
- optionally surface modifying the cross-ply panel.

13. A cross-ply panel obtainable by the method according to claim 12.

14. A polypropylene composition for preparing a machine direction oriented film (MDO film), a biaxially oriented film, a tape or a fiber, the composition comprising a post-consumer polymer resin, a beta-nucleating agent, an elastomer and optionally a virgin polymer resin.

15. A product comprising the cross-ply laminate according to any of the claims 1 to 8 or 10 or the cross-ply panel according to claim 11 or 13, the composition according to claim 14, or a machine direction oriented film obtainable by the polypropylene composition according to claim 14, wherein the product is selected from the group consisting of a component or product in automotive; aerospace; marine; logistics, such as a cargo container; consumer good, such as sports good, luggage; electric and electronic component or product; component or product in solar or wind energy application; material for building and infrastructure; component or product in orthotics; ballistic component or product; component or product in impact, stab and personal protection; industrial packaging, such as crates.
